**Europäisches Patentamt**

**European Patent Office**

**Office européen des brevets**

(11) Veröffentlichungsnummer: **0 026 858**
**A2**

(12) # EUROPÄISCHE PATENTANMELDUNG

(21) Anmeldenummer: **80105543.5**

(22) Anmeldetag: **16.09.80**

(51) Int. Cl.³: **G 01 B 7/28**

(30) Priorität: **05.10.79 CH 8990/79**

(43) Veröffentlichungstag der Anmeldung: **15.04.81**
**Patentblatt 81/15**

(84) Benannte Vertragsstaaten: **CH DE FR GB IT LI SE**

(71) Anmelder: **Maag-Zahnräder und -Maschinen Aktiengesellschaft, Hardstrasse 219, CH-8023 Zürich (CH)**

(72) Erfinder: **Spaeth, Hans, Wallisellerstrasse 3, CH-8302 Kloten (CH)**
Erfinder: **Donner, Meinrad, Bei der Kirche, CH-8855 Nuolen (CH)**

(74) Vertreter: **Hotz, Klaus, Dipl.-El.-Ing. / ETH, c/o Maag-Zahnräder und Maschinen Aktiengesellschaft Hardstrasse 219, CH-8023 Zürich (CH)**

(54) **Verfahren zum Messen von Rundlauffehlern eines Zahnrades.**

(57) Ein derartiges Messgerät (10) ermöglicht die Anwendung eines Verfahrens zum Messen von Rundlauffehlern an einem Zahnrad (12), das auf einer nicht dargestellten, drehantreibbaren Aufspannvorrichtung einer beliebigen Zahnradbearbeitungs- oder -prüfmaschine aufgespannt ist. Das Messgerät (10) ist dabei an einem Maschinentisch über eine Schlittenführung (14) gelagert und läßt sich über einen Schlitten (16), mittels eines nicht dargestellten Antriebs, in Richtung des Doppelpfeils (18) zu- bzw. rückstellbewegen. Am Schlitten (16) ist ein senkrechter Schwenkzapfen (20) befestigt, auf welchem eine Tasterführung (22) schwenkbar gelagert ist. In dieser Tasterführung (22) ist ein Taster (24) mit einem auswechselbaren Tastereinsatz (26) längsverschiebbar geführt. Ein kugelförmiger Kopf (28) des Tastereinsatzes (26) liegt während des Messzyklus an der Verzahnung an und wird vom Zahnrad (12) mitgenommen. Über Signale einer Tauchspule (32) während dieser Mitnahmebewegung läßt sich jeweils der Kulminationspunkt einer Zahnlücke detektieren.

Maag-Zahnräder & -Maschinen Aktiengesellschaft, 8023 Zürich (Schweiz)

0026858

Case 79-273
SCHWEIZ

## Verfahren zum Messen von Rundlauffehlern
### eines Zahnrades

Die Erfindung betrifft ein Verfahren zum Messen von Rundlauffehlern an der Verzahnung eines Zahnrades mittels eines Meßgerätes mit einer Tasterführung, die um eine zur Zahnradachse parallele Schwenkachse schwenkbar ist und einen Taster führt, der in Richtung zum Zahnrad hin vorgespannt ist, zyklisch in die Verzahnung eingreift während das Zahnrad sich dreht, wodurch der Taster samt Tasterführung um deren Schwenkachse geschwenkt und in bezug auf die Tasterführung zurückgedrängt wird, und mit einer elektronischen Schaltung, die bei jedem Meßzyklus die größte Zurückdrängung des Tasters ermittelt, indem sie vom Taster gelieferte Signale speichert und miteinander vergleicht.

Bei den heute üblichen sehr hohen Anforderungen an die Genauigkeit von Verzahnungen der verschiedensten Art ist es besonders

/2

wichtig, daß Schneidräder und andere verzahnte Werkzeuge, mit denen solche Verzahnungen hergestellt werden, äußerst genau gearbeitet sind. Diese Forderung führt unter anderem dazu, daß Rundlauffehler an Schneidradverzahnungen sehr genau gemessen werden müssen, um anschließend korrigiert werden zu können. Genaue Messungen von Verzahnungs-Rundlauffehlern müssen darüberhinaus auch an normalen, nicht als Schneidräder dienenden Zahnrädern bis hin zu solchen mit den größten heute erreichbaren Durchmessern und Zähnezahlen durchgeführt werden. Es besteht deshalb seit langem das Bedürfnis, Rundlauffehler nicht nur mit großer Genauigkeit, sondern auch mit geringem Zeitaufwand zu messen; die letztgenannte Forderung bedeutet, daß es wünschenswert ist, die Messung bei möglichst hoher Drehgeschwindigkeit des zu messenden Zahnrades durchzuführen.

Bei allen bekannten Geräten zum Durchführen des eingangs beschriebenen Verfahrens findet zwischen dem Taster und den Zahnflanken, an denen er anliegt, infolge der Drehung des Zahnrades eine Abwälzbewegung statt, der eine gleitende Relativbewegung überlagert ist. Der gleitenden Relativbewegung widersetzen sich Reibungskräfte, die innerhalb jedes Meßzyklus erheblich, und oft periodisch, schwanken können. Dadurch wird der Taster zu Schwingungen angeregt, deren Amplitude vorallem bei hoher Drehgeschwindigkeit des Zahnrades eine Größenordnung annehmen kann, bei der es nicht mehr gleichgültig ist, in welcher Schwingungsphase ein Meßwert für die größte Zurückdrängung des Tasters innerhalb jedes Meßzyklus gewonnen wird.

Darauf nehmen jedoch bekannte Verfahren und die zu ihrer Durchführung vorgesehenen Meßgeräte keinerlei Rücksicht, weshalb zuverlässige Meßergebnisse mit diesen bekannten Verfahren und Geräten, wenn überhaupt, nur unter der Voraussetzung gewonnen werden können, daß die Messungen bei geringer Umfangsgeschwindigkeit der Verzahnung durchgeführt werden. Bemühungen, die beschriebenen Schwingungen derart zu dämpfen, daß das eingangs beschriebene Verfahren auch bei hoher Umfangsgeschwindigkeit der zu messenden Verzahnung hinreichend genaue Meßergebnisse
liefert, waren bisher wenig erfolgreich.

Der Erfindung liegt deshalb die Aufgabe zugrunde, das Verfahren
der eingangs beschriebenen Gattung derart weiterzubilden, daß
Schwingungen des Tasters nicht oder jedenfalls nur innerhalb
der Grenzen des Zulässigen in die Meßergebnisse eingehen.

Die Aufgabe ist erfindungsgemäß dadurch gelöst, daß in jedem
Meßzyklus aus mehreren vom Taster gelieferten Signalen sowie
aus mehreren später gelieferten Signalen je ein Mittelwert
gebildet wird, die beiden Mittelwerte miteinander verglichen
werden, der größere von ihnen, sofern er der Mittelwert der
späteren Signale ist, gespeichert wird, und diese Vorgänge
solange fortgesetzt werden, bis sich ein Mittelwert ergibt,
der kleiner als der unmittelbar zuvor gebildete Mittelwert
ist, worauf dieser zuvor gebildete Mittelwert als Maximalwert
des betreffenden Meßzyklus ausgegeben wird.

Die Frequenz der an sich unerwünschten aber aus den beschriebenen Gründen nicht vermeidbaren Schwingungen des Tasters
ist bekannt oder läßt sich unschwer ermitteln. Deshalb läßt
sich auch leicht feststellen, in welchen Zeitabständen die
elektronische Schaltung Signale vom Taster abzurufen hat und
aus wievielen solchen Signalen sie jeweils einen Mittelwert
zu bilden hat, damit dieser Mittelwert von Schwingungen des
Tasters vollständig oder wenigstens im wesentlichen unbeeinflußt bleibt. Außerdem läßt sich in jedem Einzelfall bei gegebener Umfangsgeschwindigkeit der gemessenen Verzahnung ohne
weiteres berechnen, in welchen Zeitabständen Mittelwerte gebildet werden müssen, damit man innerhalb der gewünschten
Meßgenauigkeit bleibt, wenn man den größten innerhalb eines
Meßzyklus gebildeten Mittelwert als Meßwert für die größte
Zurückdrängung des Tasters innerhalb dieses Meßzyklus betrachtet.

0026858

Das erfindungsgemäße Verfahren wird bevorzugt in der Weise durchgeführt, daß der erste Mittelwert aus 2n Signalen gebildet wird, der zweite Mittelwert aus der zweiten Hälfte dieser 2n Signale sowie aus n späteren Signalen, der dritte Mittelwert aus diesen n späteren Signalen und weiteren n noch späteren Signalen und so weiter. Dadurch ergibt sich die größtmögliche Meßgenauigkeit bei gegebener Anzahl n der Signale innerhalb jeder einzelnen Gruppe von Signalen sowie bei gegebenem Zeitintervall zwischen je zwei Gruppen von Signalen.

Ein Ausführungsbeispiel der Erfindung wird im folgenden anhand schematischer Zeichnungen näher erläutert. Es zeigt:

Fig.1 einen Ausschnitt aus einer Draufsicht eines Meßgerätes, das zur Ausführung des erfindungsgemäßen
Verfahrens benutzt werden kann,

Fig.2a den Zeitablauf mehrerer Messungen und Mittelwertbildungen innerhalb eines Meßzyklus,

Fig.2b den Ablauf sämtlicher Messungen und Mittelwertbildungen innerhalb eines Meßzyklus, bezogen auf die
Bewegung der gemessenen Verzahnung, und

Fig.3 ein Blockschaltbild der zum Meßgerät gemäß Fig.1
gehörigen elektronischen Schaltung.

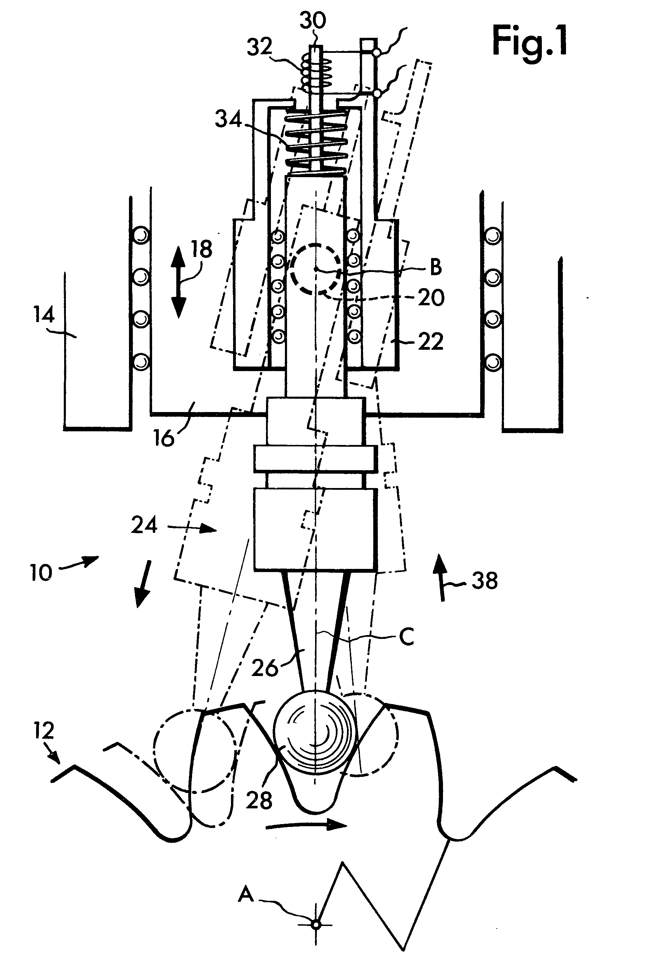

Das in Fig.1 teilweise dargestellte Meßgerät 10 hat die Aufgabe, Rundlauffehler an der Verzahnung eines Zahnrades 12 zu messen, das auf einer nicht dargestellten, drehantreibbaren Aufspannvorrichtung einer beliebigen Zahnradbearbeitungs- oder -prüfmaschine aufgespannt ist.

Zum Meßgerät 10 gehört eine Schlittenführung 14, die an einem ortsfesten Bauteil, beispielsweise Maschinentisch, der genannten Maschine ortsfest angeordnet und nötigenfalls festgespannt ist. Die Schlittenführung 14 erstreckt sich zumindest annähernd radial zum Zahnrad 12 und führt einen Schlitten 16, der mittels eines nicht dargestellten Antriebes in Richtung des Doppelpfeils 18 zustell- und rückstellbar ist. Am Schlitten 16 ist ein zur

Achse A des Zahrades 12 paralleler, zur Zeichnungsebene der Fig.1 senkrechter Schwenkzapfen 20 befestigt, dessen geometrische Achse im folgenden als Schwenkachse B bezeichnet wird. Auf dem Schwenkzapfen 20 ist eine Tasterführung 22 schwenkbar gelagert.

In der Tasterführung 22 ist ein Taster 24 längs einer Tasterachse C verschiebbar geführt. Die Tasterachse C schneidet die Schwenkachse B unter einem rechten Winkel und liegt somit in jeder beliebigen Stellung der Tasterführung 22 in einer zur Achse A des Zahrades 12 normalen Ebene.

Der Taster 24 hat einen auswechselbaren Einsatz 26, der im dargestellten Beispiel einen kugelförmigen Kopf 28 aufweist und mit diesem in eine Zahnlücke des Zahrades 12 derart eingreift, daß der Kopf an zwei einander gegenüberliegenden Zahnflanken anliegt. Anstelle des Einsatzes 26 könnte der Taster 24 einen gabelförmigen Einsatz aufweisen, der bei jedem Meßzyklus über einen Zahn greift und an dessen beiden voneinander abgewandten Zahnflanken anliegt.

Der Taster 24 weist an seinem vom Einsatz 26 abgewandten Ende eine sich längs der Tasterachse C erstreckende Stange 30 auf, die in eine Tauchspule 32 eintaucht und zusammen mit diesem einen elektroinduktiven Meßwertgeber bildet.

Rings um die Stange 30 ist eine schraubenförmige Druckfeder 34 angeordnet, die zwischen der Tasterführung 22 und dem Taster 24 derart eingespannt ist, daß sie bestrebt ist, den Taster zum Zahnrad 12 hin zu verschieben und somit den Eingriff des Tasters mit dem Zahnrad aufrecht zu erhalten.

Der Schlitten 16 läßt sich mittels eines nicht dargestellten, vorzugsweise vom Taster 24 gesteuerten Antriebes vom Zahnrad 12 soweit wegbewegen, daß der Taster 24 bzw. dessen Kopf 28 von der Verzahnung freikommt. Sobald dieser Zustand erreicht

C026858

ist, schwenkt die Tasterführung 22, beispielsweise unter dem Einfluß einer nicht dargestellten, sie im Uhrzeigersinn vorspannenden Feder, in eine Anschlagstellung, die in Fig.1 mit strichpunktierten Linien angedeutet ist. Wird der Schlitten 16 nun wieder in Richtung zur Achse A des Zahnrades 12 hin verschoben, so taucht der Taster 24 mit seinem Kopf 28, wie ebenfalls mit strichpunktierten Linien angedeutet, in diejenige Zahnlücke des Zahnrades ein, die für den nächsten Meßzyklus herangezogen werden soll. Das Zahnrad 12 dreht sich mit ständig gleichbleibender Geschwindigkeit in Richtung des Pfeils 36 und nimmt dabei den Kopf 28 mit, so daß einerseits der Taster 24 samt Tasterführung 22 um die Schwenkachse B entgegen dem Uhrzeigersinn geschwenkt wird und andererseits der Taster 24 in bezug auf die Tasterführung 22 in Richtung des Pfeils 38 zurückgedrängt wird. Der Taster 24 ist in Fig.1 mit vollen Linien in derjenigen Stellung gezeichnet, in der er am weitesten zurückgedrängt ist; in dieser Stellung schneidet die Tasterachse C die Achse A des Zahnrades 12. Der Betrag der hier erreichten größten Zurückdrängung des Tasters 24 soll trotz großer Drehgeschwindigkeit des Zahnrades 12 möglichst so genau gemessen werden, als stünden Zahnrad und Taster in dieser Stellung still.

Über die mit vollen Linien gezeichnete Stellung hinaus folgt der Taster 24 dem Zahnrad 12 noch auf einer verhältnismäßig kleinen Strecke, bis er die mit gestrichelten Linien angedeutete Stellung erreicht hat. Während der Bewegung auf dieser Strecke nimmt der Betrag, um den das Zahnrad 12 den Taster 24 in bezug auf die Tasterführung 22 zurückgedrängt hält, allmählich wieder ab.

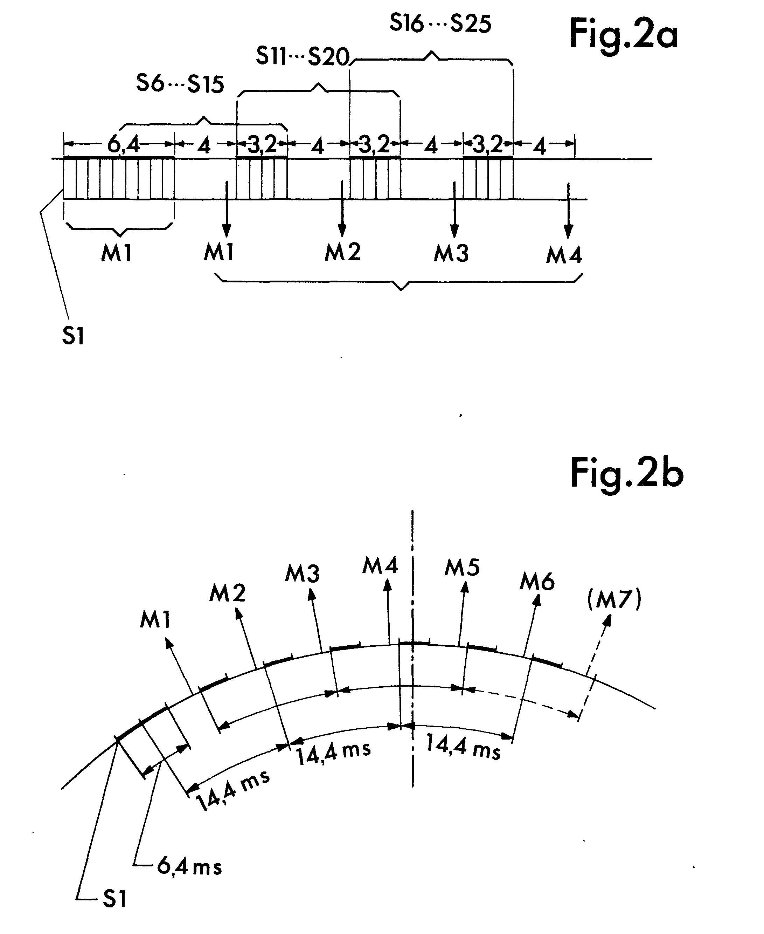

Während der beschriebenen Bewegungen des Tasters 24 finden die in Fig.2a und 2b angedeuteten Messungen statt, die in oder kurz nach dem Augenblick beginnen, in dem der Taster 24 seine in Fig.1 mit strichpunktierten Linien angedeutete Anfangsstellung erreicht hat. In diesem Augenblick ruft die in

0026858

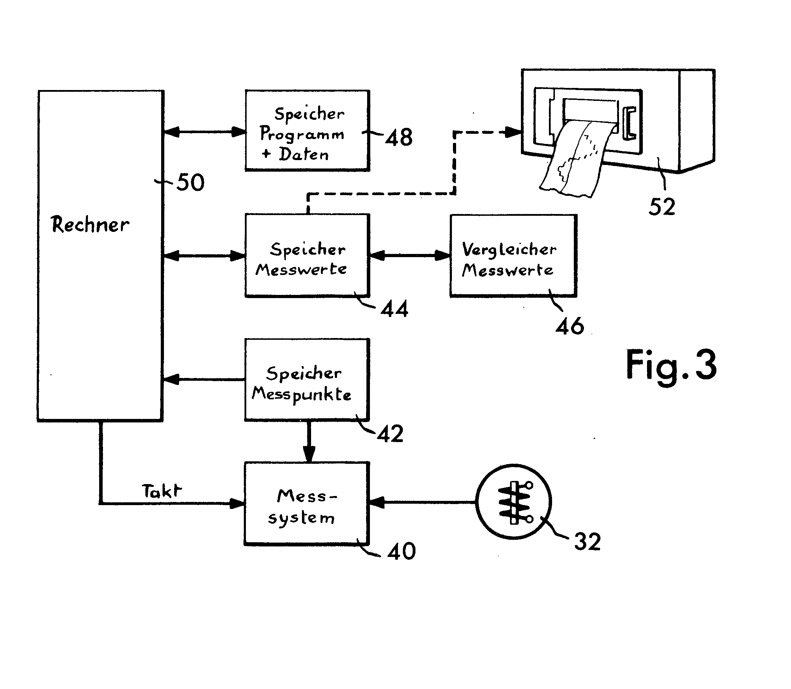

Fig.3 dargestellte Schaltung ein erstes Signal S1 von der
Tauchspule 32 ab. Diesem ersten Signal S1 folgen in Zeitabständen von rund 0,7ms weitere 9 Signale, so daß innerhalb
einer Zeitspanne von insgesamt 6,4ms eine erste Gruppe von
insgesamt 10 Signalen, die der Taster 24 geliefert hat, abgerufen wird. Anschließend wird der Abruf von Signalen für
eine Zeitspanne von im Beispiel gemäß Fig.2a 4ms unterbrochen
und während dieser Zeitspanne wird aus der ersten Gruppe von
10 Signalen ein Mittelwert M1 gebildet und dieser Mittelwert
gespeichert. Anschließend wird innerhalb einer Zeitspanne,
die nur halb so groß ist wie die erstgenannte Zeitspanne, im
dargestellten Beispiel also 3,2ms beträgt, eine zweite Gruppe
von insgesamt 5 Signalen abgerufen. Aus diesen 5 Signalen
sowie dem 5. bis 10. Signal der ersten Gruppe wird ein zweiter
Mittelwert M2 gebildet. Dieser wird mit dem ersten Mittelwert M1
verglichen , und da M2 größer ist als M1, wird M2 gespeichert,
vorzugsweise am selben Speicherplatz,  indem M1 einfach überschrieben wird.

In analoger Weise werden weitere Gruppen von Signalen abgerufen und daraus Mittelwerte M3, M4 und, wie nur in Fig.2b
dargestellt, M5 bis M7 gebildet.

Die Darstellung in Fig.2b beruht auf der Annahme, daß jeder
der neu ermittelten Mittelwerte bis einschließlich M5 größer
sei als jeder der zuvor ermittelten Mittelwerte und daß M6
der erste sei, der kleiner ist als sein Vorgänger. Dementsprechend ist M5 derjenige Mittelwert, der dem Betrag der
größten Zurückdrängung des Tasters 24 am genauesten entspricht. Dieser Mittelwert wird als maßgebender Meßwert des
betreffenden Meßzyklus ausgegeben, indem er von einem üblichen
Diagrammschreiber und/oder Drucker aufgezeichnet bzw. ausgedruckt wird.

Der Buchstabe n in Fig.2b deutet an, daß jede Signalgruppe,
die zusammen mit der vorangehenden bzw. folgenden Signalgruppe zur Bildung eines Mittelwerts herangezoegen wird, aus einer im Prinzip beliebigen Anzahl einzelner Messignale bestehen kann; die Anzahl Messignale je Gruppe lässt sich entsprechend der gewünschten Messgenauigkeit und dem Schwingungsverhalten des Tasters 24 festlegen.

In Fig.3 ist ein Blockschaltbild zum Messgerät gemäss Fig.1 gehörige elektronische Schaltung prinziphaft dargestellt. Ueber einen entsprechenden Rechentakt werden dabei von einem Messystem 40 von der Tauchspule 32 entsprechende Signale S1-25 verarbeitet. Dieses Messystem 40 veranlasst, dass entsprechende Messpunkte nach jeweils einem Zeitintervall von 0,7 m/sec in einem Messpunktespeicher 42 abgespeichert werden. Wenn dieser Speicher 42 mit 10 Messpunkten gefüllt ist, dann akkumuliert ein Rechner 50 die vorgenannten 10 Messpunkte und dividiert den so akkumulierten Wert durch die Anzahl der Messpunkte, d.h. im vorliegenden Fall durch 10 . Anschliessend wird ein so ermittelter Messwert in einem speziellen Messwertespeicher 44 abgespeichert und gleichzeitig einem Messwertevergleicher 46 zur Verfügung gestellt. Nach einer solchen ersten Berechnung sorgt das Messystem dafür, dass 5 weitere Messpunkte in den Messpunktespeicher 42 eingespeichert werden. Diese fünf neuen Messwerte, die in diesem Speicher abgelegt werden, überschreiben dabei jeweils 5 Speicherplätze so, dass die 5 zuvor aufgenommenen Messwerte noch im Speicher zur Verfügung bleiben. Auf den so zur Verfügung stehenden 10 Messpunkten wird ein zweiter Mittelwert M2 im Rechner 50 gebildet, nämlich durch Akkumulation der 10 Messwerte und durch Division durch den Faktor 10 . Ist der so gebildete Mittelwert M2 kleiner als der im Messwertespeicher 44 abgelegte Wert aus der vorigen Messung, dann wird ein Diagrammschreiber 52 aktiviert und dieser zeichnet den im Messwertespeicher stehenden Mittelwert als massgebenden Messwert des betreffenden Messzyklus auf. Der gesamte Ablauf eines Messzyklus wird durch ein Programm und entsprechende Daten, die in einem Speicher 48 stehen, über den Rechner 50 gesteuert.

0026858

P a t e n t a n s p r ü c h e

1. Verfahren zum Messen von Rundlauffehlern an der Verzahnung eines Zahnrades mittels eines Meßgerätes mit einer Tasterführung, die um eine zur Zahnradachse parallele Schwenkachse schwenkbar ist und einen Taster führt, der in Richtung zum Zahnrad hin vorgespannt ist, zyklisch in die Verzahnung eingreift während das Zahnrad sich dreht, wodurch der Taster samt Tasterführung um deren Schwenkachse geschwenkt und in bezug auf die Tasterführung zurückgedrängt wird, und mit einer elektronischen Schaltung, die bei jedem Meßzyklus die größte Zurückdrängung des Tasters ermittelt, indem sie vom Taster gelieferte Signale speichert und miteinander vergleicht, dadurch g e k e n n z e i c h n e t , daß in jedem Meßzyklus aus mehreren vom Taster (24) gelieferten Signalen (S1 usw.) sowie aus mehreren später gelieferten Signalen je ein Mittelwert (M1 usw.) gebildet wird, die beiden Mittelwerte miteinander verglichen werden, der größere von ihnen, sofern er der Mittelwert der späteren Signale ist, gespeichert wird, und diese Vorgänge solange fortgesetzt werden, bis sich ein Mittelwert ergibt, der kleiner als der unmittelbar zuvor gebildete Mittelwert ist, worauf dieser zuvor gebildete Mittelwert als Maximalwert des betreffenden Meßzyklus ausgegeben wird.

2. Verfahren nach Anspruch 1, dadurch g e k e n n z e i c h - n e t , daß der erste Mittelwert (M1) aus 2n Signalen gebildet wird, der zweite Mittelwert (M2) aus der zweiten Hälfte dieser 2n Signale sowie aus n späteren Signalen, der dritte Mittelwert (M3) aus diesen n späteren Signalen und weiteren n noch späteren Signalen usw.

4.Oktober 1979

Hkl/Lu

**Fig.1**

0026858

2/3

Fig.2a

Fig.2b

Fig.3